# EUROPEAN PATENT APPLICATION

(11) **EP 3 425 722 A1**
(43) Date of publication of application: **09.01.2019**
(21) Application number: 18179842.2
(22) Date of filing: 26.06.2018
(51) Int. Cl.: H01Q 1/12

(54) **VEHICLE WINDOW GLASS**

(30) Priority: 04.07.2017 JP 2017131539
(71) Applicant: AGC Inc., Tokyo 100-8405 (JP)
(72) Inventor: HAYASHI, Takuji, Chiyoda-ku, Tokyo 100-8405 (JP); TOKUNAGA, Satoshi, Chiyoda-ku, Tokyo 100-8405 (JP)
(74) Representative: Müller-Boré & Partner Patentanwälte PartG mbB

(57) **Abstract**

A vehicle window glass includes a glass plate; an antenna arranged on the glass plate; and a defogger arranged on the glass plate.

The antenna includes at least one antenna element; a first feeding portion connected to the antenna element; and a second feeding portion located opposite the antenna element with respect to the first feeding portion and arranged apart from the first feeding portion.

The defogger includes a pair of bus bars; and a plurality of heater wires, each connected to the pair of bus bars and extending in a right-left direction of the glass plate.

One bus bar of the pair of bus bars extends in a vertical direction of the glass plate between the first and second feeding portions.

The antenna element and the first feeding portion are located between heater wires, of the plurality of heater wires, which are adjacent to each other.

## Description

The disclosure herein generally relates to a vehicle window glass.

Conventionally, vehicle rear window glasses on which defoggers, including a plurality of heating wires extending in an approximately horizontal direction; and bus bars connected to both ends of the heating wires, are arranged have been known (e.g. see Patent Document 1). In such a vehicle rear window glass, an antenna for receiving television broadcast waves is arranged in a margin area formed by cutting out corner areas on both sides of an upper part of the defogger.

### [Citation List]

### [Patent Literature]

[PTL 1] Japanese Unexamined Patent Application Publication No. 2005-101809

However, as in the related art, when a part of a defogger is cut out, in order to arrange an antenna for preferably receiving desired electromagnetic waves, it becomes difficult to remove a fog in the margin area formed by the cut-out. That is, an area antifogged by the defogger may be reduced, and an antifogging performance of the defogger may be restricted.

Thus, the disclosure of the present application provides a vehicle window glass, in which both a reception performance of an antenna and an antifogging performance of a defogger can be ensured.

According to an aspect of the present application, a vehicle window glass including a glass plate; an antenna arranged on the glass plate; and a defogger arranged on the glass plate,
the antenna including at least one antenna element; a first feeding portion connected to the antenna element; and a second feeding portion located opposite the antenna element with respect to the first feeding portion and arranged apart from the first feeding portion,
the defogger including a pair of bus bars; and a plurality of heater wires, each connected to the pair of bus bars and extending in a right-left direction of the glass plate,
one bus bar of the pair of bus bars extending in a vertical direction of the glass plate between the first feeding portion and the second feeding portion, and
the antenna element and the first feeding portion being located between heater wires, of the plurality of heater wires, which are adjacent to each other in the vertical direction of the glass plate, is provided.

According to an aspect of the present invention, a vehicle window glass, in which both a reception performance of an antenna and an antifogging performance of a defogger can be ensured, is provided.
FIG. 1 is a plan view depicting an example of a configuration of a vehicle window glass according to an embodiment viewed from a viewpoint inside a vehicle;
FIG. 2 is a diagram depicting an example of a shape and a feeding structure of a first antenna of the vehicle window glass according to the embodiment;
FIG. 3 is a diagram depicting an example of a shape and a feeding structure of a second antenna of the vehicle window glass according to the embodiment;
FIG. 4 is a diagram depicting an example of results of measurement for antenna gains for the terrestrial digital television broadcast waves with a frequency band of 470 MHz to 720 MHz;
FIG. 5 is a diagram depicting an example of results of measurement for antenna gains for "Band III" with a frequency band of 174 MHz to 240 MHz;
FIG. 6 is a diagram depicting an example of results of measurement for antenna gains for the "L band" with a frequency band of 1452 MHz to 1492 MHz;
FIG. 7 is a diagram depicting an example of results of measurement for antenna gains for the terrestrial digital television broadcast waves with a frequency band of 470 MHz to 720 MHz, depending on a mounting position of the antenna;
FIG. 8 is a diagram illustrating the mounting positions of the antenna when the antenna gains were measured for FIG. 7; and
FIG. 9 is a diagram depicting an example of a positional relationship among a bus bar, a first feeding portion and a second feeding portion.

In the following, with reference to drawings, embodiments for implementing the present invention will be described. Note that in each embodiment, a direction, such as parallel, orthogonal, horizontal, vertical, up-down, right-left, or the like, allows a deviation enough to keep the effect of the present invention. Moreover, a shape of a corner portion of an antenna element is not limited to a right angle, but may be arcuate and rounded. Moreover, each plan view is a diagram when a glass surface of a glass plate for a vehicle window (in the following, also referred to as a "window glass") is viewed facing the glass surface, and the window glass installed in the vehicle viewed from a viewpoint inside the vehicle will be shown (vehicle interior view). Moreover, when the window glass is a front windshield installed in a front part of the vehicle or a rear windshield installed in a rear part of the vehicle, a vertical direction in each plan view corresponds to a vertical direction of the vehicle, and a right-left direction in each drawing is equivalent to a vehicle width direction. The window glass is not limited to the front windshield or the rear windshield, but may be a side glass installed in a side part of the vehicle, for example.

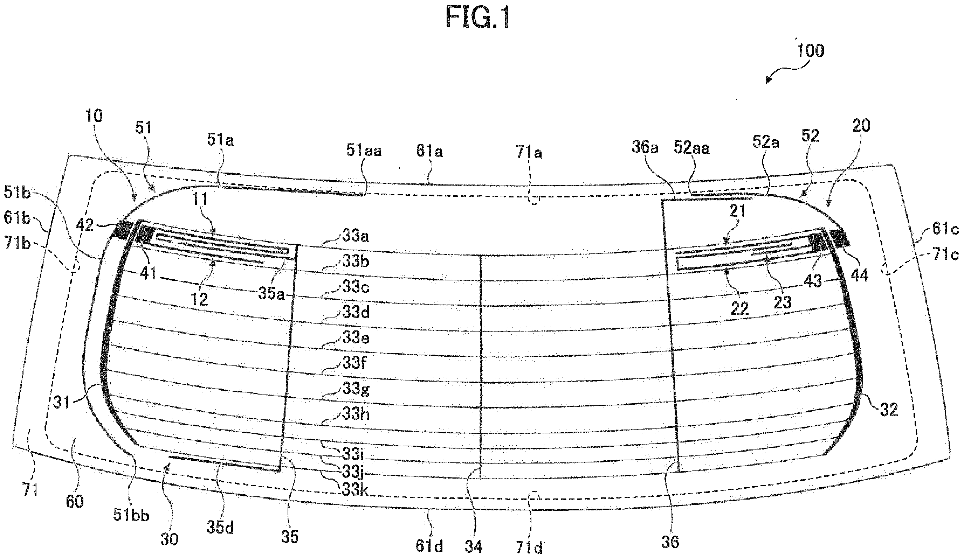

FIG. 1 is a plan view depicting an example of a configuration of a vehicle window glass according to an embodiment viewed from a viewpoint inside a vehicle. The vehicle window glass 100, illustrated in FIG. 1, is an example of a rear windshield mounted in a rear part of a vehicle. The vehicle window glass 100 includes a glass plate for a vehicle window 60, a defogger 30 arranged on the glass plate 60, a left rear antenna 10 arranged in a left area of the glass plate 60, and a right rear antenna 20 arranged in a right area of the glass plate 60.

The glass plate 60 is an example of a glass plate for a vehicle glass. An outer shape of the glass plate 60 is approximately a quadrangle. An upper edge 61a is a glass edge on an upper side of the glass plate 60. A lower edge 61d is a glass edge on a lower side (opposite to the upper edge 61a) of the glass plate 60. A left edge 61b is a glass edge on a left side of the glass plate 60. A right edge 61c is a right side (opposite to the left edge 61b) of the glass plate 60. The left edge 61b is a glass edge adjacent to left ends of the upper edge 61a and the lower edge 61d. The right edge 61c is a glass edge adjacent to right ends of the upper edge 61a and the lower edge 61d.

The glass plate 60 has a pair of side edges. The left edge 61b is an example of a first side edge that is one of the pair of side edges. The right edge 61c is an example of a second side edge that is the other of the pair of side edges. At a connection portion of the upper edge 61a and the left edge 61b, the upper edge 61a and the left edge 61b are connected to each other with a curvature, but may be connected without a curvature. The same applies to shapes of the other connection portions of edges.

The defogger 30 is an electric heating conductor pattern that removes fogging on the glass plate 60. The defogger 30 includes a plurality of heater wires extending in the right-left direction in the glass plate 60, and a plurality of bus bars for feeding to the plurality of heater wires. In the embodiment, 11 heater wires 33a to 33k that extend in the right-left direction in the glass plate 60 so as to extend parallel to each other, and a pair of bus bars 31 and 32 connected to the 11 heater wires 33a to 33k are arranged on the glass plate 60. When an electric voltage is applied between the pair of bus bars 31 and 32, the 11 heater wires 33a to 33k conduct and produce heat, and thereby fogging on the glass plate 60 is removed.

The 11 heater wires 33a to 33k are conductor patterns connected to the left bus bar 31 and the right bus bar 32 and arranged between the left bus bar 31 and the right bus bar 32. In the embodiment, intermediate portions of the 11 heating wires 33a to 33k are shortcircuited by three short circuit lines 34 to 36 extending in a vertical direction of the glass plate 60. The short circuit lines that short-circuit the intermediate portions of the heater wires may be appropriately added as necessary, or may be absent.

The left bus bar 31 is an example of a first bus bar, and is a conductor pattern that extends in the vertical direction of the glass plate 60 along the left edge 61b. The right bus bar 32 is an example of a second bus bar, and is a conductor pattern that extends in the vertical direction of the glass plate 60 along the right edge 61c.

The left rear antenna 10 is an example of a first antenna, and is arranged in an upper left area of the glass plate 60. The left rear antenna 10 is an example of a glass antenna including a pair of feeding portions and at least one antenna element, and is a conductor pattern planarly arranged on the glass plate 60.

A shape of the left rear antenna 10 is suitable for sending/receiving electromagnetic waves of the UHF (Ultra High Frequency) band with frequencies that fall within a range from 300 MHz to 3 GHz and the VHF (Very High Frequency) band with frequencies that fall within a range from 30 MHz to 300 MHz. Electromagnetic waves of the UHF band include electromagnetic waves of the terrestrial digital television broadcast waves with frequencies that fall within a range from 470 MHz to 720 MHz, electromagnetic waves of the L band of the DAB (Digital Audio Broadcast) standard with frequencies that fall within a range from 1452 MHz to 1492 MHz, and the like. Electromagnetic waves of the VHF band include electromagnetic waves of band III of the DAB standard with frequencies that fall within a range from 174 MHz to 240 MHz, and the like. The left rear antenna 10 resonates in the above-described frequency bands.

The left rear antenna 10 includes a first feeding portion and a second feeding portion arranged in the upper left area of the glass plate 60, and aligned with an interval in a right-left direction (vehicle width direction) as a conductor pattern of a pair of feeding portions. A feeding portion 41 is an example of the first feeding portion, and a feeding portion 42 is an example of the second feeding portion. From among the pair of side edges of the glass plate 60, the feeding portion 42 is closest to the left edge 61b. In the embodiment, the feeding portion 41 is connected to two elements 11 and 12. The feeding portion 42 is located opposite to the two elements 11 and 12 with respect to the feeding portion 41. The feeding portion 42 is arranged apart from the feeding portion 41.

The feeding portion 41 is electrically connected to a signal line of a circuit for communication (not shown) via a prescribed first conductive member. The feeding portion 42 is electrically connected to an external grounding member (e.g. a grounding member of the circuit for communication or a vehicle body) via a prescribed second conductive member. That is, the left rear antenna 10 is a dipole type antenna provided with the feeding portion 41 and the feeding portion 42 as a pair of feeding points.

The feeding portion 41 is arranged opposite to the left edge 61b with respect to the feeding portion 42. The feeding portion 41 and the feeding portion 42 may be arranged so that positions are shifted with respect to each other in the vertical direction from the illustrated positional relationship. In other words, one of the feeding portions 41 and 42 may be arranged closer to the upper edge 61a than the other.

The left rear antenna 10 includes two elements 11 and 12, as a conductor pattern of at least one antenna element.

The element 11 is an example of a first antenna element connected to the first feeding portion. In the embodiment, the element 11 is a linear conductor connected to the feeding portion 41. More specifically, an end of the element 11 is connected to an upper right portion of the feeding portion 41.

The element 12 is an example of a second antenna element connected to the first feeding portion. In the embodiment, the element 12 is a linear conductor connected to the feeding portion 41. More specifically, an end of the element 12 is connected to a lower right portion of the feeding portion 41.

In the embodiment, the left bus bar 31 extends in the vertical direction of the glass plate 60 in a space between the feeding portion 41 and the feeding portion 42. In other words, the left bus bar 31 extends from the upper edge 61a toward the lower edge 61d. Moreover, the elements 11 and 12 and the feeding portion 41 are located between the heater wires 33a, 33b adjacent to each other in the vertical direction of the glass plate 60, from among the 11 heater wires 33a to 33k. In the embodiment, the elements 11 and 12 and the feeding portion 41 do not directly contact with the heater wires 33a, 33b.

When the elements 11 and 12 and the feeding portion 41 are located between the heater wire 33a and the heater wire 33b, the elements 11 and 12 are capacitively coupled to at least one of the heater wire 33a and the heater wire 33b. According to the capacitive coupling, the left rear antenna 10 can use the defogger 30 as a radiation conductor, and thereby an antenna gain of the left rear antenna 10 increases.

According to the configuration in which the elements 11 and 12 and the feeding portion 41 are located between the heater wire 33a and the heater wire 33b, a fogging in an area where the elements 11 and 12 and the feeding portion 41 are arranged can be removed promptly by the heater wire 33a and the heater wire 33b.

Thus, in the vehicle window glass 100, according to the embodiment, both the reception performance of the left rear antenna 10 and the antifogging performance of the defogger 30 can be ensured.

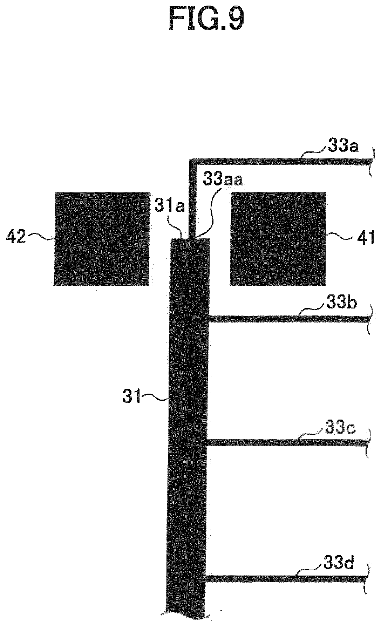

Note that the left bus bar 31 need not pass through the space between the feeding portion 41 and the feeding portion 42 in the vertical direction of the glass plate 60. A part of the left bus bar 31 may extend into the space between the feeding portion 41 and the feeding portion 42 without passing through the space. For example, as illustrated in FIG. 9, an upper end 31a of the left bus bar 31 and a left end 33aa of the heater wire 33a may be located in the space between the feeding portion 41 and the feeding portion 42, and connected to each other in an area of the space.

Moreover, in the embodiment, the feeding portion 42 is located between the left bus bar 31 and the left edge 61b. Thus, in a state where the vehicle window glass 100 is mounted to a metallic window frame 71 of the vehicle, the feeding portion 42 is located near a left frame edge 71b of the window frame 71. The position near the left frame edge 71b may be, in a plan view in the state where the vehicle window glass 100 is mounted to the window frame 71, a position on a left bus bar 31 side or on a left edge 61b side with respect to the left frame edge 71b, or may be a position overlapping with the left frame edge 71b.

In the case where the feeding portion 42 is located near the left frame edge 71b of the window frame 71, when a connection element 51 to be connected to the feeding portion 42 is arranged, the connection element 51 and the metallic window frame 71 are easily capacitively coupled. Because in the left rear antenna 10 having such a connection element 51, the metallic window frame can be used as a grounding member, sufficient grounding can be obtained. Moreover, because the antenna gain of the left rear antenna 10 can be controlled by changing a shape of the connection element 51, such as a length or a width, a degree to which the antenna gain of the left rear antenna 10 is affected by a shape of the vehicle window frame 71 can be reduced.

The connection element 51 preferably includes a part extending along an outer edge of the glass plate 60. Because, according to the configuration, the connection element 51 and the metallic window frame 71 become further easily capacitively coupled, the degree to which the antenna gain of the left rear antenna 10 is affected by the shape of the vehicle window frame 71 can be further reduced.

The connection element 51, according to the present embodiment, includes a partial element 51a extending along the upper edge 61a, and a partial element 51b extending along the left edge 61b.

The partial element 51a extends upward (in the direction toward the upper edge 61a) from the feeding portion 42 as a point of origin, extends to the right (in the direction toward the right edge 61c) along the upper edge 61a, and extends until an end portion 51aa that is a termination point of the extension to the right. When the partial element 51a extending along the upper edge 61a extends along an upper frame edge 71a of the metallic window frame 71, an antenna gain of horizontally polarized waves (e.g. the terrestrial digital television broadcast waves) is enhanced.

The partial element 51b extends downward (in the direction toward the lower edge 61d) along the left edge 61b from the feeding portion 42 as a point of origin, and extends until an end portion 51bb that is a termination point of the downward extension. When the partial element 51b extending along the left edge 61b extends along a left frame edge 71b of the metallic window frame 71, an antenna gain of vertically polarized waves (e.g. the DAB standard waves) is enhanced.

The elements 11 and 12 and the feeding portion 41 are arranged in an antifogging area surrounded by the left bus bar 31, which is one of the bus bars extending in the vertical direction of the glass plate 60, the heater wires 33a and 33b that are adjacent to each other in the vertical direction of the glass plate 60, and a short circuit line 35 that at least short-circuits the heater wires 33a and 33b. When the elements 11 and 12 and the feeding portion 41 are arranged in such an antifogging area, the elements 11 and 12 are capacitively coupled to at least one of the heater wire 33a, the heater wire 33b and the short circuit line 35. The short circuit line 35 added to the heater wires 33a and 33b, further facilitates the capacitive coupling of the elements 11 and 12 to the defogger 30, and thereby facilitates further the increase of the antenna gain of the left rear antenna 10.

The elements 11 and 12 come close to a first branch line 35a that branches from the short circuit line 35. The first branch line 35a, in the present embodiment, extends between the heater wire 33a and the heater wire 33b in the right-left direction of the glass plate 60, and is interposed by the element 11 and the element 12. The configuration where the elements 11 and 12 come close to the first branch line 35a further facilitates the capacitive coupling of the elements 11 and 12 to the defogger 30, and thereby facilitates further the increase of the antenna gain of the left rear antenna 10.

In the embodiment, the short circuit line 35 extends in the vertical direction of the glass plate 60 so as to short-circuit all the heater wires 33a to 33k. Moreover, a second branch line 35d branches from the short circuit line 35. The second branch line 35d is located below the heater wire 33k that is located at the lowest position, from among the heater wires 33a to 33k, and extends in the left-right direction of the glass plate 60. The second branch line 35d extends along the lower frame edge 71d. According to the second branch line 35d, the antenna gain of the left rear antenna 10 can be controlled.

In the embodiment, the elements 11 and 12 and the feeding portion 41 are located between the heater wire 33a that is located at the uppermost position from among the heater wires 33a to 33k and the heater wire 33b that is located below the heater wire 33a and adjacent to the heater wire 33a. The heater wire 33a is an example of a first heater wire, and the heater wire 33b is an example of a second heater wire. In this way, when the elements 11 and 12 and the feeding portion 41 are arranged in an upper area of the defogger 30, the antenna gain of the left rear antenna 10 is enhanced compared with the case of being arranged in a lower area of the defogger 30.

Note that the area, in which the elements 11 and 12 and the feeding portion 41 are arranged, is not limited to the uppermost antifogging area in the defogger 30, as long as a desired antenna gain can be obtained; the area may be a region below the uppermost antifogging area. For example, the elements 11 and 12 and the feeding portion 41 may be arranged between the heater wire 33c and the heater wire 33d.

On the other side, the right rear antenna 20 is an example of a second antenna, and arranged in an upper right area of the glass plate 60. The right rear antenna 20 is an example of a glass antenna having a pair of feeding portions and at least one antenna element, and is a conductor pattern arranged planarly on the glass plate 60.

A shape of the right rear antenna 20 is suitable for sending/receiving electromagnetic waves of the UHF (Ultra High Frequency) band with frequencies that fall within a range from 300 MHz to 3 GHz and the VHF (Very High Frequency) band with frequencies that fall within a range from 30 MHz to 300 MHz. Electromagnetic waves of the UHF band includes electromagnetic waves of the terrestrial digital television broadcast waves with frequencies that fall within a range from 470 MHz to 720 MHz, electromagnetic waves of the L band of the DAB (Digital Audio Broadcast) standard with frequencies that fall within a range from 1452 MHz to 1492 MHz, and the like. The right rear antenna 20 resonates in the above-described frequency bands.

With the left rear antenna 10 and the right rear antenna 20, a diversity antenna can be configured.

The right rear antenna 20 includes a first feeding portion and a second feeding portion arranged in the upper right area of the glass plate 60, and aligned with an interval in a right-left direction (vehicle width direction) as a conductor pattern of a pair of feeding portions. A feeding portion 43 is an example of the first feeding portion, and a feeding portion 44 is an example of the second feeding portion. From among the pair of side edges of the glass plate 60, the feeding portion 43 is closest to the right edge 61c. In the embodiment, the feeding portion 43 is connected to three elements 21 to 23. The feeding portion 44 is located opposite to the three elements 21 to 23 with respect to the feeding portion 43. The feeding portion 44 is arranged apart from the feeding portion 43.

The feeding portion 43 is electrically connected to a signal line of a circuit for communication (not shown) via a prescribed first conductive member. The feeding portion 44 is electrically connected to an external grounding member (e.g. a grounding member of the circuit for communication or a vehicle body) via a prescribed second conductive member. That is, the right rear antenna 20 is a dipole type antenna provided with the feeding portion 43 and the feeding portion 44 as a pair of feeding points.

The feeding portion 43 is arranged opposite to the right edge 61c with respect to the feeding portion 44. The feeding portion 43 and the feeding portion 44 may be arranged so that positions are shifted with respect to each other in the vertical direction from the illustrated positional relationship. In other words, one of the feeding portions 43 and 44 may be arranged closer to the upper edge 61a than the other.

The right rear antenna 20 includes three elements 21 to 23, as a conductor pattern of at least one antenna element.

The element 21 is an example of a first antenna element connected to the first feeding portion. In the embodiment, the element 21 is a linear conductor connected to the feeding portion 43. More specifically, an end of the element 21 is connected to an upper left portion of the feeding portion 43.

The element 22 is an example of a second antenna element connected to the first feeding portion. In the embodiment, the element 22 is a linear conductor connected to the feeding portion 43. More specifically, an end of the element 22 is connected to a lower left portion of the feeding portion 43.

The element 23 is an example of a third antenna element connected to the first feeding portion. In the embodiment, the element 23 is a linear conductor connected to the feeding portion 43. More specifically, an end of the element 23 is connected to a central portion of the left surface of the feeding portion 43.

In the embodiment, the right bus bar 32 extends in the vertical direction of the glass plate 60 in a space between the feeding portion 43 and the feeding portion 44. In other words, the right bus bar 32 extends from the upper edge 61a toward the lower edge 61d. Moreover, the elements 21 to 23 and the feeding portion 43 are located between the heater wires 33a, 33b adjacent to each other in the vertical direction of the glass plate 60, from among the 11 heater wires 33a to 33k. In the embodiment, the elements 21 to 23 and the feeding portion 43 do not directly contact with the heater wires 33a, 33b.

When the elements 21 to 23 and the feeding portion 43 are located between the heater wire 33a and the heater wire 33b, the elements 21 to 23 are capacitively coupled to at least one of the heater wire 33a and the heater wire 33b. According to the capacitive coupling the right rear antenna 20 can use the defogger 30 as a radiation conductor, and thereby an antenna gain of the right rear antenna 20 increases.

According to the configuration in which the elements 21 to 23 and the feeding portion 43 are located between the heater wire 33a and the heater wire 33b, a fogging in an area where the elements 21 to 23 and the feeding portion 43 are arranged can be removed promptly by the heater wire 33a and the heater wire 33b.

Thus, in the vehicle window glass 100, according to the embodiment, both the reception performance of the right rear antenna 20 and the antifogging performance of the defogger 30 can be ensured.

Note that the right bus bar 32 need not pass through the space between the feeding portion 43 and the feeding portion 44 in the vertical direction of the glass plate 60. A part of the right bus bar 32 may extend into the space between the feeding portion 43 and the feeding portion 44. For example, in the same way as the aforementioned left bus bar 31, an upper end of the right bus bar 32 and a right end of the heater wire 33a may be located in the space between the feeding portion 43 and the feeding portion 44, and connected to each other in the area of the space.

Moreover, in the embodiment, the feeding portion 44 is located between the right bus bar 32 and the right edge 61c. Thus, in a state where the vehicle window glass 100 is mounted to a metallic window frame 71 of the vehicle, the feeding portion 44 is located near a right frame edge 71c of the window frame 71. The position near the right frame edge 71c may be, in a plan view in the state where the vehicle window glass 100 is mounted to the window frame 71, a position on a right bus bar 32 side or on a right edge 61c side with respect to the right frame edge 71c, or may be a position overlapping with the right frame edge 71c.

In the case where the feeding portion 44 is located near the right frame edge 71c of the window frame 71, when a connection element 52 to be connected to the feeding portion 44 is arranged, the connection element 52 and the metallic window frame 71 are easily capacitively coupled. Because in the right rear antenna 20 having such a connection element 52, the metallic window frame can be used as a grounding member, sufficient grounding can be obtained. Moreover, because the antenna gain of the right rear antenna 20 can be controlled by changing a shape of the connection element 52, such as a length or a width, a degree to which the antenna gain of the right rear antenna 20 is affected by a shape of the vehicle window frame 71 can be reduced.

The connection element 52 preferably includes a part extending along the outer edge of the glass plate 60. Because, according to the configuration, the connection element 52 and the metallic window frame 71 become further easily capacitively coupled, the degree to which the antenna gain of the right rear antenna 20 is affected by the shape of the vehicle window frame 71 can be further reduced.

The connection element 52, according to the present embodiment, includes a partial element 52a extending along the upper edge 61a.

The partial element 52a extends upward (in the direction toward the upper edge 61a) from the feeding portion 44 as a point of origin, extends to the left (in the direction toward the left edge 61b) along the upper edge 61a, and extends until an end portion 52aa that is a termination point of the extension to the left. When the partial element 52a extending along the upper edge 61a extends along an upper frame edge 71a of the metallic window frame 71, an antenna gain of horizontally polarized waves (e.g. the terrestrial digital television broadcast waves) is enhanced.

The elements 21 to 23 and the feeding portion 43 are arranged in an antifogging area surrounded by the right bus bar 32 that is one of the bus bars extending in the vertical direction of the glass plate 60, the heater wires 33a, 33b that are adjacent to each other in the vertical direction of the glass plate 60, and a short circuit line 36 that at least short-circuits the heater wires 33a and 33b. When the elements 21 to 23 and the feeding portion 43 are arranged in such an antifogging area, the elements 21 to 23 are capacitively coupled to at least one of the heater wire 33a, the heater wire 33b and the short circuit line 36. The short circuit line 36 added to the heater wires 33a and 33b, further facilitates the capacitive coupling of the elements 21 to 23 to the defogger 30, and thereby facilitates further the increase of the antenna gain of the right rear antenna 20.

The partial element 52a comes close to a third branch line 36a that branches from the short circuit line 36. The third branch line 36a, in the present embodiment, extends, between the heater wire 33a and the partial element 52a, in the right-left direction of the glass plate 60. The configuration where the partial element 52a comes close to the third branch line 36a further facilitates the capacitive coupling of the partial element 52a to the third branch line 36a, and thereby facilitates further the control of the antenna gain of the right rear antenna 20. In the embodiment, the short circuit line 36 extends in the vertical direction of the glass plate 60 so as to short-circuit all the heater wires 33a to 33k.

In the embodiment, the elements 21 to 23 and the feeding portion 43 are located between the heater wire 33a, which is located at the uppermost position from among the heater wires 33a to 33k, and the heater wire 33b, which is located below the heater wire 33a and adjacent to the heater wire 33a. In this way, when the elements 21 to 23 and the feeding portion 43 are arranged in an upper area of the defogger 30, the antenna gain of the right rear antenna 20 is enhanced compared with the case of being arranged in a lower area of the defogger 30.

Note that the area, in which the elements 21 to 23 and the feeding portion 43 are arranged, is not limited to the uppermost antifogging area in the defogger 30, as long as a desired antenna gain can be obtained; the area may be a region below the uppermost antifogging area. For example, the elements 21 to 23 and the feeding portion 43 may be arranged between the heater wire 33c and the heater wire 33d.

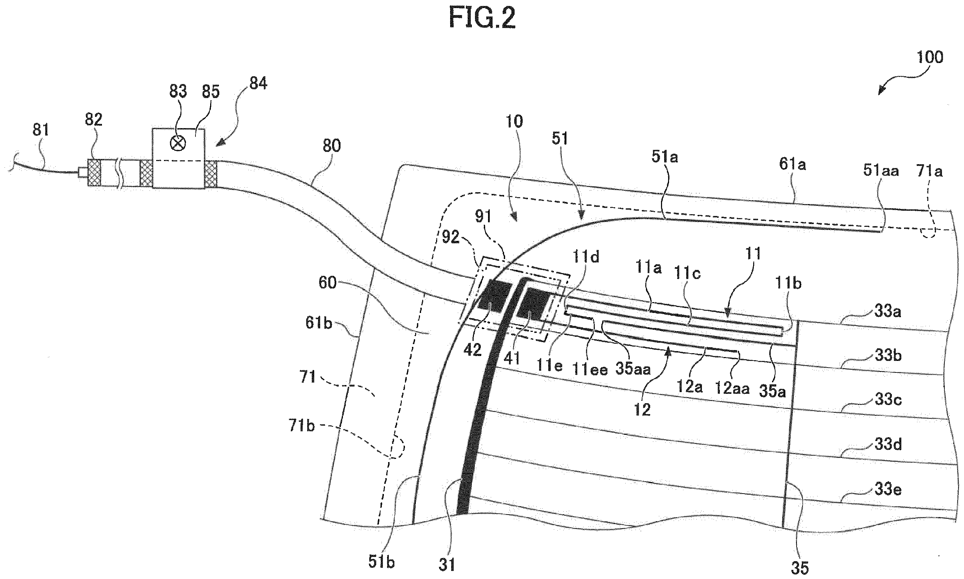

FIG. 2 is a diagram depicting an example of a shape and a feeding structure of the left rear antenna 10. The left rear antenna 10 includes elements 11 and 12.

The element 11 includes a turnaround element that turns back at least once in the right-left direction of the glass plate 60. The element 11, illustrated in FIG. 2, has a form of turning around twice. The element 11 includes three horizontal elements 11a, 11c and 11e, a right turnaround part 11b, and a left turnaround part 11d. The element 11 has an antenna length from a connection point, at which one end of the element 11 is connected to the feeding portion 41, to a tip portion 11ee that is another end of the element 11.

The element 12 includes a horizontal element 12a extending in the right-left direction of the glass plate 60. The element 12 has an antenna length from a connection point, at which one end of the element 12 is connected to the feeding portion 41, to a tip portion 12aa that is another end of the element 12.

According to the horizontal elements 11a, 11c, 11e, and 12a included in the left rear antenna 10, the antenna gain of the left rear antenna 10 for horizontally polarized waves is enhanced.

Moreover, the first branch line 35a comes close to the element 11 so that a tip portion 35aa of the first branch line 35a faces the tip portion 11ee of the element 11. When the first branch line 35a comes close to the element 11, the left rear antenna 10 can use the short circuit line as a radiation conductor, and thereby the antenna gain for vertically polarized wave (e.g. Band III of the DAB standard) is enhanced.

The feeding portion 41 is electrically connected to a signal line of a circuit for communication (not shown), such as a tuner, via a prescribed first conductive member. The feeding portion 42 is electrically connected to an external grounding member (e.g. a grounding member of the circuit for communication or a vehicle body) via a prescribed second conductive member.

For the aforementioned conductive members, for example, feeder wires, such as AV lines or coaxial cables, are used. The letter "A" of the AV lines represents low voltage cables for automobiles, and the letter "V" represents vinyl coating. In the case of using coaxial cable 80, the internal conductor 81 of the coaxial cable 80 is electrically connected to the feeding portion 41, and the external conductor 82 of the coaxial cable 80 is electrically connected to the feeding portion 42.

Alternatively, a configuration in which a male connector arranged at an end of the coaxial cable 80 is connected to a female connector 91 installed in the feeding portions 41 and 42 may be employed. According to the connectors, it becomes easy to attach the internal conductor 81 of the coaxial cable 80 to one of the feeding portions, and attach the external conductor 82 of the coaxial cable 80 to the other feeding portion. The female connector 91 may incorporate an amplifier 92 for amplifying signals.

The external conductor 82 may be connected to a metallic part of the vehicle body as a ground at an intermediate portion 84 of the coaxial cable 80. For example, the external conductor 82 at the intermediate portion 84 is connected to the vehicle body as a ground through a bracket 85 that fixes the intermediate portion 84 to the vehicle body by a bolt 83. The amplifier 92 need not be incorporated in the aforementioned female connector 91. The amplifier 92 may be inserted into the intermediate portion 84.

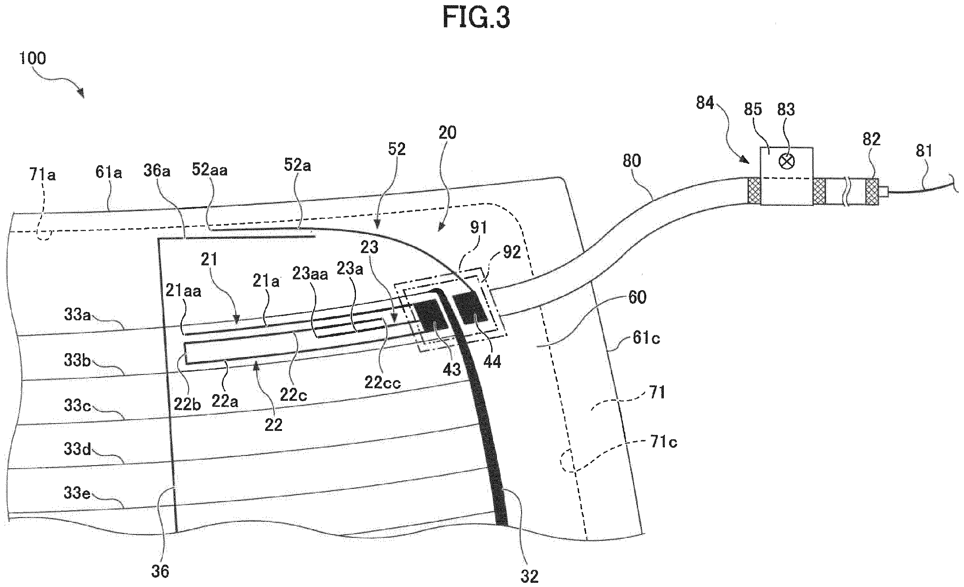

FIG. 3 is a diagram depicting an example of a shape and a feeding structure of the right rear antenna 20. The right rear antenna 20 includes elements 21 to 23.

The element 21 includes a horizontal element 21a extending in the right-left direction of the glass plate 60. The element 21 has an antenna length from a connection point, at which one end of the element 21 is connected to the feeding portion 43, to a tip portion 21aa that is another end of the element 21.

The element 22 includes a turnaround element that turns back at least once in the right-left direction of the glass plate 60. The element 22, illustrated in FIG. 3, has a form of turning around once. The element 22 includes two horizontal elements 22a and 22c, and a left turnaround part 22b. The element 22 has an antenna length from a connection point, at which one end of the element 22 is connected to the feeding portion 43, to a tip portion 22cc that is another end of the element 22.

The element 23 includes a horizontal element 23a extending in the right-left direction of the glass plate 60. The horizontal element 23a is located between the element 21 and the element 22, and located between the horizontal element 22a and the horizontal element 22c. The element 23 has an antenna length from a connection point, at which one end of the element 23 is connected to the feeding portion 43, to a tip portion 23aa that is another end of the element 23.

According to the horizontal elements 21a, 22a, 22c and 23a included in the right rear antenna 20, the antenna gain of the right rear antenna 20 for horizontally polarized waves is enhanced.

The feeding portion 43 is electrically connected to a signal line of a circuit for communication (not shown), such as a tuner, via a prescribed first conductive member. The feeding portion 44 is electrically connected to an external grounding member (e.g. a grounding member of the circuit for communication of a vehicle body) via a prescribed second conductive member. The aforementioned detailed explanation for the feeding portion 41 and the feeding portion 42 will be applied by reference as a detailed explanation for a feeding structure in the feeding portion 43 and the feeding portion 44, and thereby a detailed explanation for the feeding structure in the feeding portion 43 and the feeding portion 44 will be omitted.

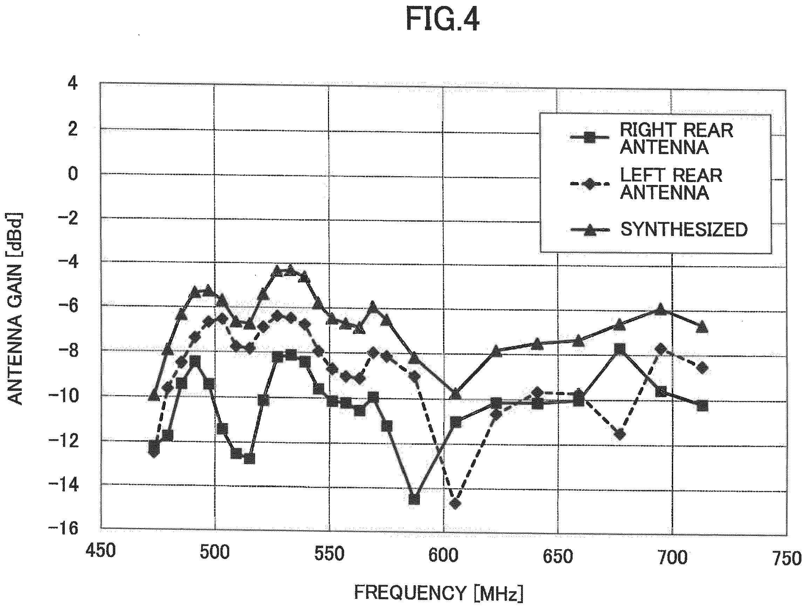

FIG. 4 is a diagram depicting an example of results of measurement for antenna gains for the terrestrial digital television broadcast waves with a frequency band of 470 MHz to 720 MHz. In FIG. 4, an antenna gain of a left rear antenna 10 (See FIG. 2), an antenna gain of a right rear antenna 20 (See FIG. 3), and a synthesized value of the antenna gains of the left rear antenna 10 and of the right rear antenna 20 are shown. The unit of antenna gain is dBd. Values in the vertical axis indicate average values of antenna gains which were measured for each prescribed angle in a horizontal plane within a half-circumferential range around the rear side of the vehicle. The average values measured for the respective frequencies were further averaged. The obtained value was -8.32 dBd for the left rear antenna 10, -10.04 dBd for the right rear antenna 20, and -6.36 dBd for the synthesized value of the antenna gains of the left rear antenna 10 and of the right rear antenna 20.

Accordingly, a receiving sensitivity of the left rear antenna 10 for the terrestrial digital television broadcast wave is higher than a receiving sensitivity of the right antenna 20. Furthermore, a receiving sensitivity for the terrestrial digital television broadcast waves of a diversity antenna configured of the left rear antenna 10 and the right rear antenna 20 is higher than the receiving sensitivity of the left rear antenna 10 alone.

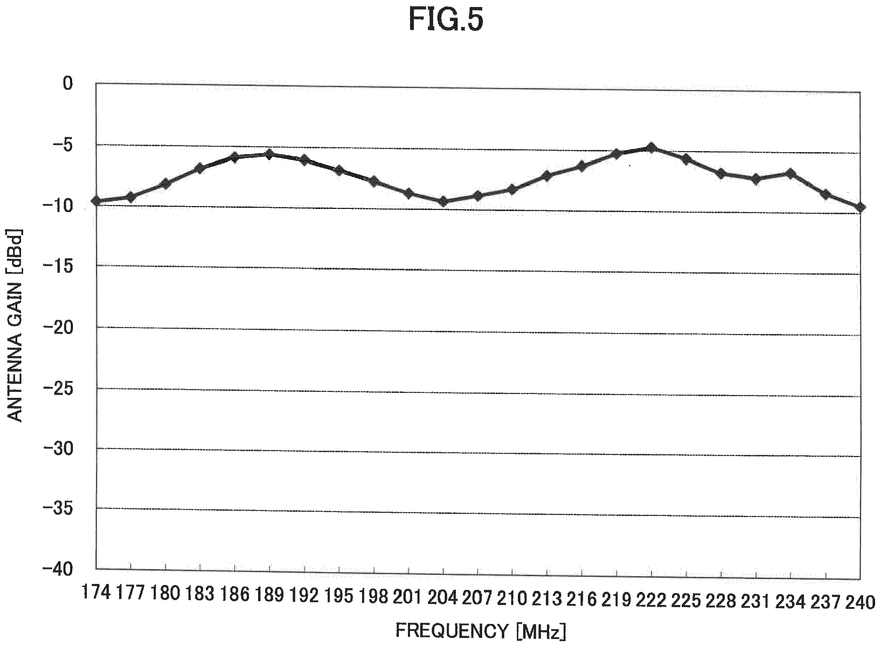

FIG. 5 is a diagram depicting an example of results of measurement for antenna gains for "Band III" with a frequency band of 174 MHz to 240 MHz. In FIG. 5, only antenna gains of the left rear antenna 10 (See FIG. 2) are shown. The unit of antenna gain is dBd. Values in the vertical axis indicate average values of antenna gains which were measured for each prescribed angle in a horizontal plane within a half-circumferential range around the rear side of the vehicle. The average values measured for the respective frequencies were further averaged. The obtained value was -7.1 dBd. Accordingly, a receiving sensitivity for Band III of the left rear antenna 10 is relatively high.

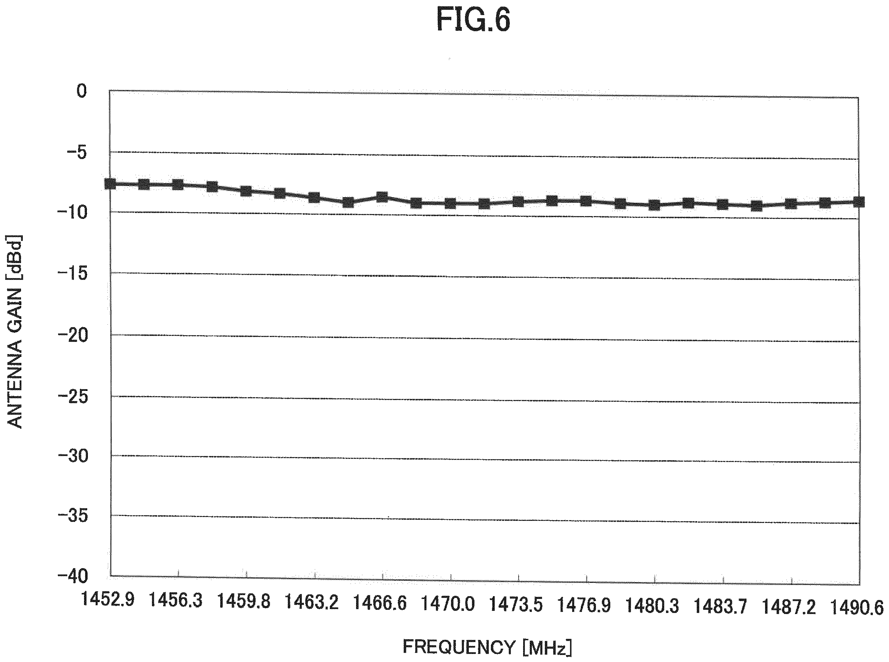

FIG. 6 is a diagram depicting an example of results of measurement for antenna gains for the "L band" with a frequency band of 1452 MHz to 1492 MHz. In FIG. 6, only antenna gains of the left rear antenna 10 (See FIG. 2) are shown. The unit of antenna gain is dBd. Values in the vertical axis indicate average values of antenna gains which were measured for each prescribed angle in a horizontal plane within a half-circumferential range around the rear side of the vehicle. The average values measured for the respective frequencies were further averaged. The obtained value was -8.6 dBd. Accordingly, a receiving sensitivity for the L band of the left rear antenna 10 is relatively high.

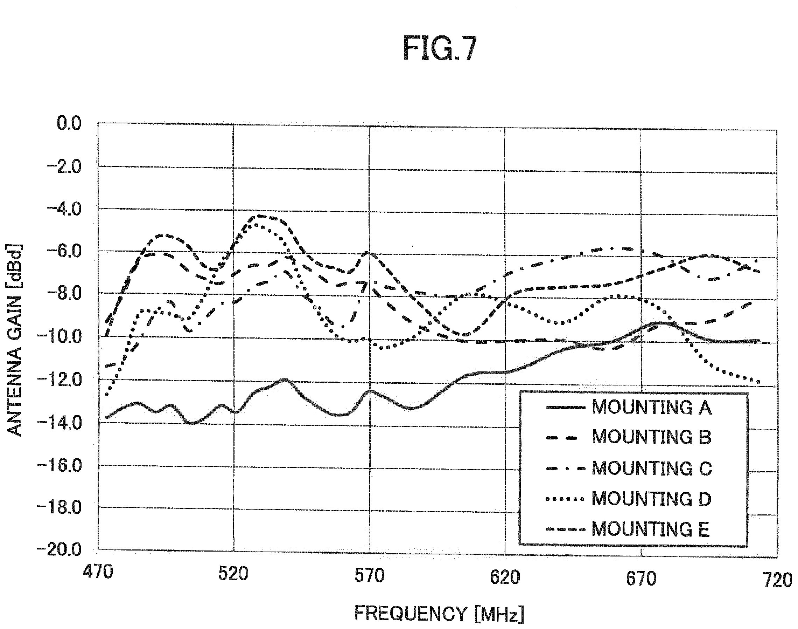

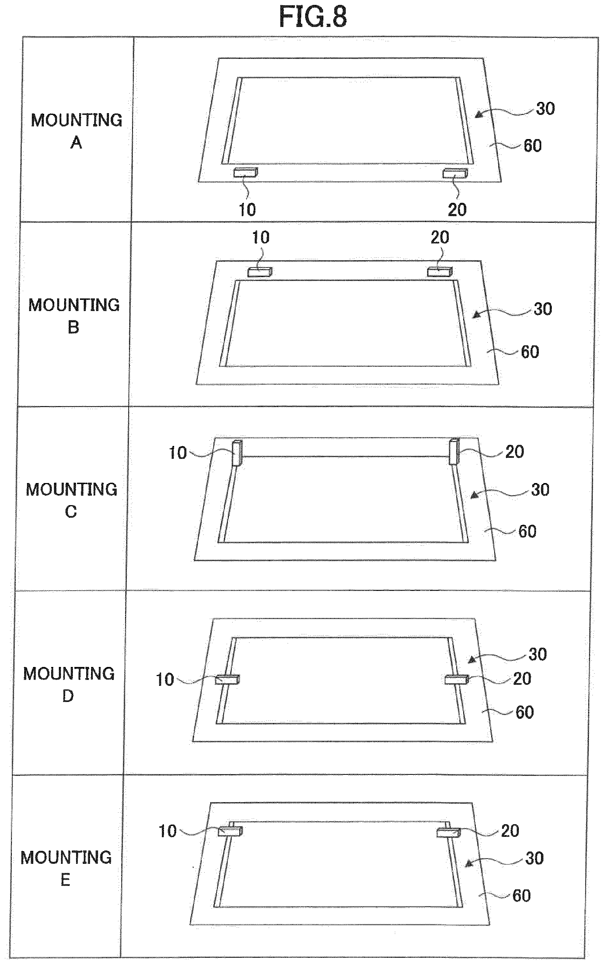

FIG. 7 is a diagram depicting an example of results of measurement for antenna gains for the terrestrial digital television broadcast waves with a frequency band of 470 MHz to 720 MHz, depending on a mounting position of the antenna. FIG. 8 is a diagram illustrating the mounting positions of the antenna when the antenna gains were measured for FIG. 7.

Mounting "A" indicates a case where the rear antennas 10 and 20 were arranged in an area below the heater wire 33k that was located at the lowermost position in the defogger 30. Mounting "B" indicates a case where the rear antennas 10 and 20 were arranged in an area above the heater wire 33a that was located at the uppermost position in the defogger 30. Mounting "C" indicates a case where the elements 11 and 12 and the feeding portion 41 of the left rear antenna 10 were arranged in an area above the feeding portion 42 connected to an upper end portion of the left bus bar 31, and the elements 21 to 23 and the feeding portion 43 of the right rear antenna 20 were arranged in an area above the feeding portion 44 connected to an upper end portion of the right bus bar 32. Mounting "D" indicates a case where the feeding portion 41 and the feeding portion 42 were arranged so that a central portion of the left bus bar 31 in the vertical direction was interposed between the feeding portion 41 and the feeding portion 42, and the feeding portion 43 and the feeding portion 44 were arranged so that a central portion of the right bus bar 32 in the vertical direction was interposed between the feeding portion 43 and the feeding portion 44. Mounting "E" indicates a case where the feeding portion 41 and the feeding portion 42 were arranged so that an upper end portion of the left bus bar 31 in the vertical direction was interposed between the feeding portion 41 and the feeding portion 42, and the feeding portion 43 and the feeding portion 44 were arranged so that an upper end portion of the right bus bar 32 in the vertical direction was interposed between the feeding portion 43 and the feeding portion 44 (See FIG. 1).

FIG. 7 depicts a synthesized value of the antenna gains of the left rear antenna 10 and of the right rear antenna 20. The unit of antenna gain is dBd. Values in the vertical axis indicate average values of antenna gains which were measured for each prescribed angle in a horizontal plane within a half-circumferential range around the rear side of the vehicle. The average values measured for the respective frequencies were further averaged. The obtained values were -12.1 dBd for Mounting "A"; -7.7 dBd for Mounting "B"; -7.9 dBd for Mounting "C"; -8.2 dBd for Mounting "D"; and -6.4 dBd for Mounting "E".

Accordingly, it was found that a receiving sensitivity in the case where the antenna element is arranged inside the defogger 30 (Mounting "E") is higher than a receiving sensitivity in the case where the antenna element is arranged outside the defogger 30 (Mounting "A" and Mounting "B"). Moreover, it was also found that a receiving sensitivity in the case where upper end portions of the bus bars are interposed between the pair of feeding portions (Mounting "E") is higher than a receiving sensitivity in the case where central portions of the bus bars are interposed between the pair of feeding portions (Mounting "D").

As described above, the preferred embodiments and the like of the window glass for vehicle have been described. However, the present invention is not limited to the above-described specific embodiments, and various variations and modification, such as combinations with a part or a whole of another embodiment or replacement, may be made without departing from the scope of the present invention.

For example, an "end portion" of an element may be a starting point or an end point of an extension of the element, or may be a starting point vicinity or an end point vicinity that is a conductor part in front of the starting point or the end point of the element. Moreover, in a connection portion, elements may be connected to each other, with a curvature.

Moreover, the bus bar, the antenna element, and the feeding portion are formed by printing a paste containing an electrically conductive metal (e.g. a silver paste) on a vehicle inner surface of a window glass and baking the paste. However, the formation method of the bus bar, the antenna element, and the feeding portion is not limited to this. For example, the bus bar, the antenna element, or the feeding portion may be formed by arranging a linear body or a foil type body containing a conductive material such as copper on a vehicle inner surface or a vehicle outer surface of the window glass. Alternatively, the bus bar, the antenna element or the feeding portion may be adhered onto the window glass via an adhesive agent, or may be arranged inside the window glass.

A shape of the feeding portion may be determined according to a shape of a mounting surface of the aforementioned conductive member or the connector. A rectangular shape such as a square, an approximate square, a rectangle, or an approximate rectangle, or a polygonal shape is preferable in mounting. Note that a circular shape, such as a circle, an approximate circle, an ellipse, or an approximate ellipse may be employed.

Moreover, a configuration in which a conductive layer forming at least any one of the bus bar, the antenna element and the feeding portion is arranged inside or on a surface of a synthetic resin film, and the synthetic resin film with the conductive layer is arranged on the vehicle inner surface or the vehicle outer surface of the window glass, may be employed. Furthermore, a configuration in which a flexible circuit substrate, on which an antenna element is formed, is arranged on the vehicle inner surface or the vehicle outer surface of the window glass may be employed.

Moreover, a part of or a whole of the bus bar, the feeding portion and the antenna element may be arranged on a concealing film formed on a glass surface on a peripheral edge of the window glass. The concealing film specifically includes a ceramic such as a black ceramic film. In this case, when viewed from the vehicle outside of the window glass, a part arranged on the concealing film is not viewed, and thereby the window glass is excellent in design.

The present application is based on and claims the benefit of priority of Japanese Priority Application No. 2017-131539 filed on July 4, 2017, the entire contents of which are hereby incorporated by reference.

### REFERENCE SIGNS LIST

10 left rear antenna (example of left antenna)
20 right rear antenna (example of right antenna)
11,12,21,22,23 element
30 defogger
31 left bus bar
32 right bus bar
33a to 33k heater wire
34,35,36 short circuit line
41 to 44 feeding portion
51,52 connection element
60 glass plate
71 window frame
100 vehicle window glass

## Claims

1. A vehicle window glass comprising:
a glass plate;
an antenna arranged on the glass plate; and
a defogger arranged on the glass plate,
wherein the antenna includes
at least one antenna element;
a first feeding portion connected to the antenna element; and
a second feeding portion located opposite the antenna element with respect to the first feeding portion and arranged apart from the first feeding portion,
wherein the defogger includes a pair of bus bars; and
a plurality of heater wires, each connected to the pair of bus bars and extending in a right-left direction of the glass plate,
wherein one bus bar of the pair of bus bars extends in a vertical direction of the glass plate between the first feeding portion and the second feeding portion, and
wherein the antenna element and the first feeding portion are located between heater wires, of the plurality of heater wires, which are adjacent to each other in the vertical direction of the glass plate.

2. The vehicle window glass according to claim 1,
wherein the antenna includes a connection element to be connected to the second feeding portion.

3. The vehicle window glass according to claim 2,
wherein the connection element includes a part extending along an edge of the glass plate.

4. The vehicle window glass according to claim 3,
wherein the connection element includes a part extending along an upper edge of the glass plate.

5. The vehicle window glass according to claim 3 or 4,
wherein the connection element includes a part extending along a side edge of the glass plate.

6. The vehicle window glass according to any one of claims 1 to 5,
wherein the antenna element and the first feeding portion are arranged in an area surrounded by the one bus bar, the heater wires which are adjacent to each other, and a short circuit line configured to short-circuit the heater wires which are adjacent to each other.

7. The vehicle window glass according to claim 6,
wherein the antenna element comes close to a branch line branching from at least one line from among the heater wires which are adjacent to each other and the short circuit line.

8. The vehicle window glass according to any one of claims 1 to 7,
wherein the antenna element and the first feeding portion are arranged between a first heater wire that is located at an uppermost position from among the plurality of heater wires and a second heater wire that is located below the first heater wire and adjacent to the first heater wire.

9. The vehicle window glass according to any one of claims 1 to 8,
wherein the antenna element includes a first antenna element connected to the first feeding portion and a second antenna element connected to the first feeding portion,
wherein the first antenna element includes a turnaround element that turns back at least once in the right-left direction of the glass plate, and
wherein the second antenna element includes a horizontal element extending in the right-left direction of the glass plate.

10. The vehicle window glass according to any one of claims 1 to 9,
wherein the pair of bus bars includes a left bus bar that extends along a left edge of the glass plate; and a right bus bar that extends along a right edge of the glass plate, and
wherein the antenna includes a left antenna in which the left bus bar extends between the first feeding portion and the second feeding portion of the left antenna; and a right antenna in which the right bus bar extends between the first feeding portion and the second feeding portion of the right antenna.
